Europäisches Patentamt

European Patent Office

Office européen des brevets

(11) Publication number: **0 514 747 A2**

# EUROPEAN PATENT APPLICATION

(21) Application number: **92108010.7**

(22) Date of filing: **12.05.92**

(51) Int. Cl.5: **G01S 17/10**

(30) Priority: **14.05.91 IT TO910355**

(43) Date of publication of application:
**25.11.92 Bulletin 92/48**

(84) Designated Contracting States:
**DE FR GB IT NL SE**

(71) Applicant: **SIP SOCIETA ITALIANA PER l'ESERCIZIO DELLE TELECOMUNICAZIONI P.A.**
**Via San Dalmazzo, 15**
**I-10122 Torino(IT)**

(72) Inventor: **Bollero, Adriano**
**Via Buonarroti, 7**
**Rivarolo Can.Se (TO)(IT)**
Inventor: **Guglielmina, Marco**
**Via Testona, 14**
**Torino(IT)**

(74) Representative: **Riederer Freiherr von Paar zu Schönau, Anton et al**
**Lederer, Keller & Riederer, Freyung 615,**
**Postfach 26 64**
**W-8300 Landshut(DE)**

(54) **Instrument for measuring optical fibre length.**

(57) The instrument measures optical fibre length by measuring the transit time of an optical pulse signal travelling said fibre. Time measurement is effected by an electronic counter which is cyclically started at the transmission of the optical signal and stopped at its reception. A microprocessor controls the light source so as to make it send the optical pulse signal at a repetition frequency quite uncorrelated with respect to that of the electrical signal counted by the counter. The time spent to travel the fibre is obtained by computing the arithmetic mean value over a great number of counting values supplied by the counter.

The present invention relates to apparatus for telecommunications systems using light radiations transmitted on physical carriers and more particularly to an instrument for measuring optical fibre length.

As known, cables comprising a certain number of optical fibres, which can be some ten kilometres long, are now used in optical telecommunications systems.

Both in the laboratory and in the field some measurements are to be carried out on the single optical fibres to investigate the cable operative conditions.

Important measurements are those effected during traction tests on the cable, both in the laboratory and during laying, and more particularly the measurements of fibre elongation due to strains undergone.

It is also necessary to carry out analogous measurements in the thermal room to evaluate linear fibre expansion, or, when fibre-length absolute-values or fibre length variations are already known, to indirectly measure the temperature of the environment wherein they are placed, e.g. the temperature of the ground wherein the optical cable is laid underground.

Of course, since such measurements are chiefly carried out in the field, simple, portable and highly accurate instruments are required.

The demanded accuracy is in fact of the order of few millimetres, whilst the length whereupon measurements are to be carried out can attain some ten kilometres. Among the measures supplied by the instrument both fibre length variations, useful during laying, and the absolute fibre length, useful to control elongation with measurements spaced in time, are compulsory.

Length measurement on optical fibres are usually carried out by measuring the delay undergone by a sinusoidal or pulse signal while traveling the fibre. The length is then obtained by multiplying the delay by the propagation velocity within the fibre, which quantity depends on fibre physical properties. If this velocity is unknown, it can be easily obtained by measuring the time spent by the light radiation to travel a fibre segment of known length.

Delay measurement can be effected by exploiting several techniques as described in the paper entitled "Measuring longitudinal strain in optical fibres" by Michael R. Brininstool, issued on Optical Engineering, November 1987, Vol.26 No.11, pages 1112-1119.

According to a first technique, the time spent by a pulse to travel the entire fibre is directly measured. The instruments permitting achievement of the required accuracy are unluckily cumbersome and costly, since they are mainly apt to carry out an analysis of the waveform obtained at the fibre end, displayed on the screen of a sampling oscilloscope.

According to another technique, the optical fibre is treated as an element of a resonant circuit, wherein oscillation frequency is measured either by starting the oscillations in an electronic circuit or by changing the repetition frequency of the pulses emitted by a laser up to the obtention of a resonance peak. However all said measurements are rather complex and require two fibre ends.

Finally there is a technique according to which the phase delay of a sinusoidal signal used to modulate the optical carrier, extracted both at fibre input and output is measured. The measurement can be effected even if only one fibre end is available by exploiting the signal reflected by the other end. This technique can be employed by operating at a single frequency, yet in that case fibre length variations only are known, whilst absolute fibre length is not, and the results are affected by the presence of reflections due to refractive index discontinuities along the fibre.

The absolute length could be known by systematically scanning a certain range of frequencies, yet such a measurement system would demand complex apparatus, such as frequency synthesizers and phase measuring devices apt to operate on the whole range of frequencies scanned. Said disadvantages are overcome by the instrument for measuring optical fibre length, provided by the present invention, which supplies highly accurate results, presents small encumbrance and low cost, automatically corrects the drifts of the measured values induced by level and temperature changes, supplies both absolute length and length variation measurements and can operate both in transmission and in reflection.

The present invention provides an instrument for measuring optical fibre length, which operates in the time domain by measuring the time delay of the light pulse sent into a fibre end and received at the other end or at the same end after being reflected by the far end, characterized in that the light pulses are sent to the fibre at a first repetition frequency quite uncorrelated with respect to a second repetition frequency of the pulses to be counted by a counter, started at each pulse transmitted and stopped at each pulse received, the time delay being the resulting arithmetic mean value calculated on the basis of a sufficient number of counts supplied by said counter.

The foregoing and other characteristis of the present invention will be made clearer by the following description of a preferred embodiment thereof given by way of a non limiting example, and by the annexed drawing showing a block diagram of the instrument.

The instrument operates in the time domain by measuring the delay of a light pulse, e.g. of the leading edge, the trailing edge or any other kind of level transition, the light pulse being generated by a laser diode LA and detected by an avalanche photodiode APD. A microprocessor MP controls the laser by sending onto wire 1 a periodic pulse signal, at a repetition frequency of about 10 kHz, and at the same time enables a counter CO to count the pulses that a generator BT, operating at a frequency of about 70 MHz, emits on wire 2. For purposes which will be disclosed hereinafter, the frequency of the signal on wire 1 at 10 kHz and the frequency on wire 2 at 70 MHz are quite uncorrelated, i.e. they are relatively prime which means that a division between the two frequencies does not give a whole number. The mentioned frequencies are "about 10 kHz" and "about 70 MHz", as precisely 10 kHz and 70MHz are not relatively prime. The light pulses generated by laser LA are sent to an optical fibre 4, connected through an optical coupler AO to optical fibre 5, which is the instrument emission output.

The reflected optical pulses, coming from the outside through fibre 5, can be extracted from optical coupler AO and sent onto optical fibre 6.

If both ends of the optical fibre under test are available, one can be coupled to fibre 5 and the other to optical fibre 7, representing the input of the receiving part of the instrument. Or, an end can be coupled to fibre 6 and the other to fibre 7, by using for the measurement the power reflected by fibre 5 left open. In the latter case power levels received are near those used for reflection measurements.

On the contrary, if one end only is available, the measurement can be effected by using the signal reflected by the far end of the fibre, which must be duly prepared in order to ensure reflection of at least 4% of the incident power. In this case, a short fibre trunk is coupled to fibres 6 and 7 in order to carry to the input of the receiving part of the instrument the reflected pulses, extracted by optical coupler AO.

The pulses received through fibre 7 are detected by the avalanche photodiode APD and sent through wire 8 to a threshold comparator TC, whose threshold value is set and sent onto wire 9 by microprocessor MP. The signal resulting from the comparison carried out by comparator TC, rendered available on wire 3, is used to stop the counting of counter CO, which supplies hereinafter the counted value to microprocessor MP through connection 10.

Microprocessor MP computes the arithmetic mean M of a determined number of counting values, e.g. 2000, supplied by counter CO in a convenient time interval. The value obtained, multiplied by period T of the signal supplied by BT, coincides with propagation delay D along the optical fibre under test.

Theoretically, the maximum resolution obtainable by an only counting is determined by the signal frequency on wire 2, i.e. 70 MHz. In this case, the uncertainty of more or less one pulse entails an uncertainty of more or less one metre on the length, if the measurement is effected using reflected light, and of about the double if it is effected by using transmitted light. To obtain a better resolution the mean is computed on a great number of measurements: in this case statistical considerations show that resolution can be much higher, provided there is no correlation between the counting period and period T of counted pulses. In fact, delay D on the line can be expressed by: $D = N \cdot T + d$ where the number of counted pulses N is the integer of the ratio D/T and d is the decimal portion of the delay D multiplied by T (i.e. d is the fraction of delay on the line inferior to T and hence uncountable). Due to the lack of correlation between the counting period and the period of counted signal T, the probability that the number of pulses counted in a period be N is $P1 = d/T$, while the probability that the number of pulses counted be $N+1$ is $P2 = (T-d)/T$. The mean value of the counts is

$$M = (N+1) \cdot P1 + N \cdot P2 = (N+1) \cdot d/T + N \cdot (T-d)/T = D/T$$

hence

$$D = M \cdot T$$

The instrument is also equipped with a few circuits apt to automatically correct the drifts of the values measured, caused by level and temperature variations. A first circuit stabilizes the power emitted by laser LA by extracting and detecting a portion of it. A voltage proportional to the power is sent through wire 11 to a level meter LM, which in turn sends the measured value to microprocessor MP on wire 12. The microprocessor consequently generates a bias current and sends it to the laser through wire 13. In case of unwanted variations in the output power, feedback brings the operating point of the laser back to the desired conditions.

Environment temperature variations are detected by meter TM and sent through wire 14 to microprocessor MP, which consequently changes the bias current through photodiode APD by means of an appropriate signal sent onto wire 14. In this way the photodiode gain remains constant. Finally, the threshold at which comparator TC operates is controlled. In fact, since the leading edge (or trailing edge) of the received pulse is non-ideal, but it has a duration of some hundred ps, it is necessary to keep the comparison threshold at a fixed fraction of the peak value of the received pulse, e.g. at about 1/3. In this way the time error affection the detection of the respective edge of the pulse received is kept constant; therefore, it can afterwards be systematically corrected. The peak value of the pulse, present on wire 8, is measured by a peak meter AM and the relative value is sent to microprocessor MP on wire 16. The microprocessor computes a threshold value equal to 1/3 of the peak value and send it to comparator TC through wire 9.

A portable processor PC, connected through connection 17 to microprocessor MP, allows recording and displaying absolute length and length variation values measured, as well as further interesting data, such as the level of optical power received, the estimate of data variance, ect., according to the program used.

Accurate measurements depend only on the use of a pair of frequencies certainly uncorrelated. The lower frequency usually cannot be changed, as it is determined by the clock of the computer control, but the higher frequency could be possibly changed, for example by selecting different crystals controlling pulse generator BT, if a different selection or use of different pairs of frequencies is desired.

It is evident that what described has been given by way of a non-limiting example. Variations and modifications are possible without going out of the scope of the claims.

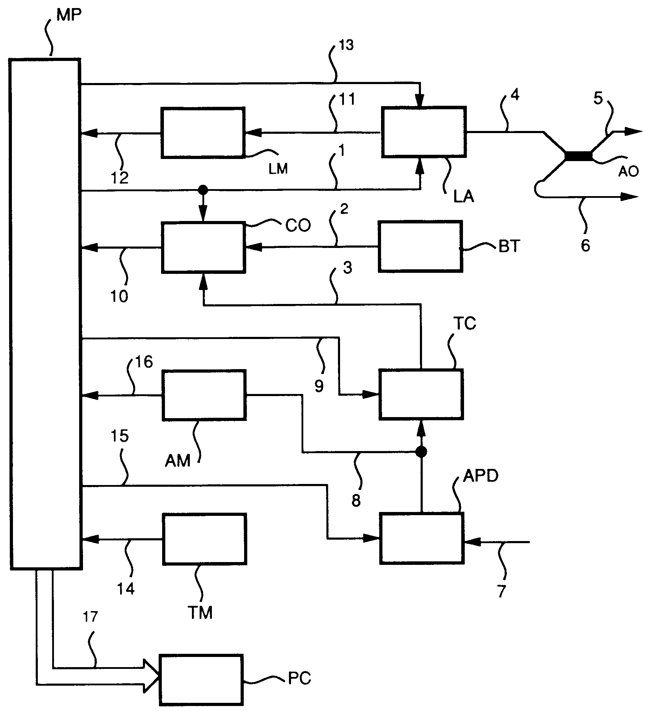

## Claims

1. An instrument for measuring optical fibre length, which operates in the time domain by measuring the time delay of a light pulse sent into a fibre end and received at the other end or at the same end after being reflected by the far end, characterized in that the light pulses are sent to the fibre at a first repetition frequency quite uncorrelated with respect to a second repetition frequency of pulses to be counted by a counter (CO), started at each pulse tranmitted and stopped at each pulse received, the time delay being the resulting arithmetical mean value calculated on the basis of a sufficient number of counts supplied by said counter (CO).

2. An instrument as in claim 1, characterized in that said counter (CO) is stopped when a determined edge of the received pulse has attained a predetermined fraction of the peak value, which is measured by a meter (TC) and the measured value is used by a microprocessor (MP) for determining a correspondent threshold value (9) for a threshold comparator (TC), which operates on the pulse received and generates the singal (3) for stopping the counter at each threshold crossing.

3. An instrument as in claim 1 or 2, characterized in that it comprises an optical coupler (AO), which renders available at a fist output (5) said light pulse generated internally and at a second output (6) the reflected light pulse coming from said first output.

4. An instrument as in any of claims 1 to 3, characterized in that the leading edges of the light pulses are used for measuring the time delay.